# EUROPEAN PATENT APPLICATION

(11) **EP 3 208 021 A1**
(43) Date of publication of application: **23.08.2017**
(21) Application number: 17156064.2
(22) Date of filing: 14.02.2017
(51) Int. Cl.: B23D 57/00, B28D 5/00, B28D 5/04

(54) **INGOT SLICING WIRE SAW, ROLLER MODULE THEREOF, AND METHOD FOR SLICING INGOT**

(30) Priority: 19.02.2016 TW 105104861; 18.10.2016 TW 105133518
(71) Applicant: AUO Crystal Corporation, Taichung City 421 (TW)
(72) Inventor: Lei, Shih-Chueh, 421 Taichung City (TW); Kuo, Chih-Yang, 421 Taichung City (TW); Chan, Chih-Hung, 421 Taichung City (TW); Chen, Chan-Tien, 421 Taichung City (TW); Chiou, Shao-Hui, 438 Taichung City (TW)
(74) Representative: V.O.

(57) **Abstract**

A roller module (3) is used for driving a sawing wire (21) to slice an ingot (20) into multiple wafers (202), and includes two spaced apart main rollers (51, 51') and an auxiliary roller (52). Each main roller (51, 51') has a rotating axis (512) and a diameter (A1). An imaginary horizontal plane (S1) is defined to pass through the rotating axes (512) of the main rollers (51, 51'). Two imaginary vertical planes (S2, S3) are defined to be perpendicular to the imaginary horizontal plane (S1) and respectively pass through the rotating axes (512) of the main rollers (51, 51'). The auxiliary roller (52) is disposed above the imaginary horizontal plane (S1) and between the imaginary vertical planes (S2, S3). An uppermost side (5211) of the auxiliary roller (52) is not lower than an uppermost side (515) of each main roller (51, 51'). The auxiliary roller (52) has a diameter (A2) smaller than one half of that of each main roller (51, 51').

## Description

The disclosure relates to an ingot slicing wire saw, a roller module thereof, and a method for slicing the ingot.

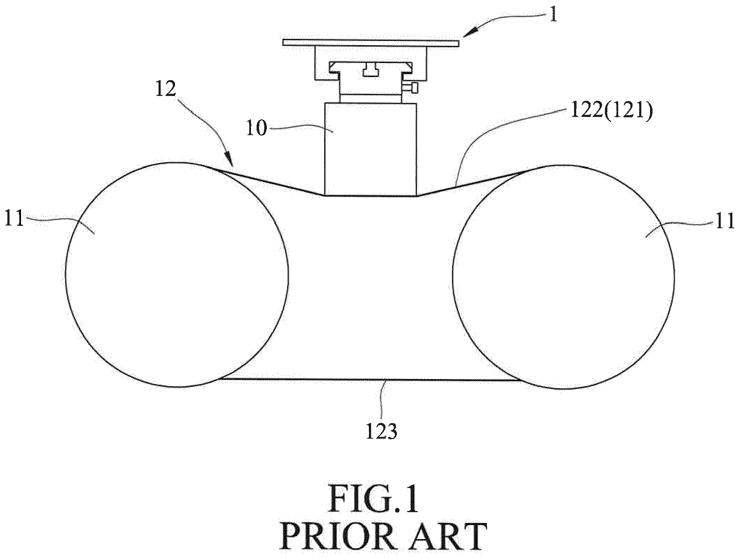

Referring to FIG. 1, a conventional ingot slicing wire saw 1 includes a pair of rollers 11 and a sawing wire 12 wound on the rollers 11 to form a plurality of sawing wire sections 121. While an ingot 10 is driven downwardly, the rollers 11 rotate clockwise and counterclockwise to drive the sawing wire sections 121 to move back and forth between the rollers 11 such that the ingot 10 is sliced into a plurality of wafers.

With the advance of ingot slicing technology, sawing wires are made thinner for cost reduction. However, thinner sawing wires tend to deform to a greater extent when abutting against the ingot 10. A larger deformation of the sawing wires may result in wire trembling and even wire breaking, both of which may adversely affect dimensional precision of the sliced wafers.

Reducing distance between the rollers 11 is a way of reducing wire deformation. Since the distance between the rollers 11 must be larger than the width of the ingot 10 for the ingot 10 tobe sliced therebetween, the diameter of each of the rollers 11 may need to be reduced to achieve reduction of the distance between the rollers 11. The sawing wire 12 has an upper portion 122 located between uppermost ends of the rollers 11, and a lower portion 123 that located between lowermost ends of the rollers 11. A larger ingot may be in contact with the lower portion 123 of the sawing wire 12 during slicing, which may adversely affect the slicing outcome. Therefore, the diameters of the rollers 11 are limited by the size of the ingot 10.

In addition, the reduction of roller diameter may also result in the following disadvantages. A smaller roller causes the curvature of a section of the wire wound thereon to be increased, which may result in concentration of larger stress on the smaller roller and cause the wire to cut into or slice a portion of the roller off, thereby adversely affecting the dimensional precision of the sliced wafers and the lifetime of the roller. What is more, a reduction in the diameter of the roller decreases the driving speed for the sawing wire. In this case, a speed change mechanism (not shown) connected between the roller and a motor may be required for increasing the driving speed. Dissynchronization may occur between the roller and the speed change mechanism due to the repeated clockwise and counter clockwise rotation switching. The disadvantages mentioned in this paragraph may result in creation of more particles during wafer slicing, which will contaminate the wafers, so that additional time is required to clean sliced wafers. As a result, the wafer manufacturing efficiency is reduced.

Therefore, an object of the present disclosure is to provide an ingot slicing wire saw, a roller module thereof and a method for slicing the ingot that can alleviate at least one of the drawbacks associated with the prior art.

According to a first aspect of the present disclosure, a roller module is adapted for driving a sawing wire to slice an ingot into a plurality of wafers.

The roller module includes two main rollers and at least one auxiliary roller. The main rollers are horizontally spaced apart from each other. Each of the main rollers has a rotating axis and a diameter. An imaginary horizontal plane is defined to pass through the rotating axes of the main rollers. Two imaginary vertical planes are defined to be perpendicular to the imaginary horizontal plane and respectively pass through the rotating axes of the main rollers. The auxiliary roller is disposed above the imaginary horizontal plane and between the imaginary vertical planes. An uppermost side of the auxiliary roller is not lower than an uppermost side of each of the main rollers. The auxiliary roller has a diameter smaller than one half of the diameter of each of the main rollers. The main rollers and the auxiliary roller are adapted for the sawing wire to be wound thereon to form a wire net having a sawing section that spans over the main rollers and the auxiliary roller and that is adapted for slicing the ingot. The main rollers are operable to drive the sawing section of the wire net to reciprocate on the main rollers and the auxiliary roller such that the wire net slices the ingot.

According to a second aspect of the present disclosure, an ingot slicing wire saw includes a feeding unit adapted for an ingot to be mounted thereon, and a roller module adapted for a sawing wire to be wound thereon. The sawing wire has a diameter ranging from 40 µm to 80 µm, and a sawing section adapted for slicing the ingot.

The roller module includes two main rollers and two auxiliary rollers. The main rollers are horizontally spaced apart from each other. Each of the main rollers has a rotating axis and a diameter. The auxiliary rollers are horizontally disposed between the main rollers. A lowermost side of each of the auxiliary rollers is not higher than an uppermost side of each of the main rollers. Each of the auxiliary rollers has a rotating axis, a diameter smaller than one half of the diameter of each of the main rollers, a hollow main body portion, and two solid end portions respectively connected to opposite ends of the main body portion of a corresponding one of the auxiliary rollers. A distance between the rotating axes of the auxiliary rollers is smaller than a distance between the rotating axes of the main rollers. The feeding unit is operable to move the ingot downwardly while the main rollers and the auxiliary rollers drive the sawing section of the sawing wire to reciprocate on the main rollers and the auxiliary rollers such that the sawing section slices the ingot into a plurality of wafers.

According to a third aspect of the present disclosure, a method for slicing an ingot includes:
providing a roller module adapted for driving a sawing wire, a feeding unit adapted for the ingot to be mounted thereon, and a cleaning module disposed adjacent to the roller module, the roller module including a first main roller and a second main roller that are respectively disposed at opposite sides of the feeding unit and are horizontally spaced apart from each other, and a first auxiliary roller that is disposed between the first main roller and the feeding unit, the sawing wire being wound on the first main roller, the second main roller and the first auxiliary roller to form a wire net having a sawing section that spans over the first main roller, the second main roller and the first auxiliary roller, the cleaning module including an upper cleaning member that is disposed above the first main roller, and a first lower cleaning member that is disposed adjacent to the first main roller and that is lower than the upper cleaning member;
operating the roller module to drive the sawing section of the sawing net to reciprocate on the first main roller, the second main roller and the first auxiliary roller, and subsequently operating the feeding unit to move downwardly such that the sawing section slices the ingot into a plurality of wafers;
operating the cleaning module to spray a liquid, such that the upper cleaning member is operated to spray the liquid onto the first auxiliary roller, and the first lower cleaning member is operated to spray the liquid onto the first main roller; and
rotating the first main roller and the second main roller unidirectionally such that the sawing section moves from the first main roller toward the second main roller, and moving the feeding unit upwardly, in a manner that the liquid is carried by the sawing wire onto the wafers and the sawing section located among the wafers to clean the wafers.

Other features and advantages of the present disclosure will become apparent in the following detailed description of the embodiments with reference to the accompanying drawings, of which:
FIG. 1 is a schematic view showing a conventional ingot slicing wire saw;
FIG. 2 is a perspective view of a first embodiment of an ingot slicing wire saw according to the present disclosure;
FIG. 3 is a partially exploded perspective view of the first embodiment;
FIG. 4 is a partially cross sectional view of the first embodiment;
FIG. 5 is a view similar to FIG. 4 but illustrating that a feeding unit of the first embodiment is moved downwardly such that an ingot mounted on the feeding unit is sliced;
FIG. 6 is a longitudinal sectional view of an auxiliary roller of the first embodiment;
FIG. 7 is a longitudinal sectional view of a variation of the auxiliary roller of the first embodiment;
FIG. 8 is a longitudinal sectional view of another variation of the auxiliary roller of the first embodiment;
FIG. 9 is a longitudinal sectional view of the auxiliary roller of the first embodiment;
FIG. 10 is a cross sectional view of the auxiliary roller of the first embodiment taken along line X-X of FIG. 9;
FIG. 11 is perspective view of a second embodiment of an ingot slicing wire saw according to the present disclosure;
FIG. 12 is a partially cross sectional view of the second embodiment;
FIG. 13 is a perspective view of a third embodiment of an ingot slicing wire saw according to the present disclosure that is being adjusted with an adjusting jig;
FIG. 14 is a longitudinal sectional view of the auxiliary roller of the third embodiment;
FIG. 15 is a perspective view of a fourth embodiment of an ingot slicing wire saw according to the present disclosure;
FIG. 16 is a perspective view of a fifth embodiment of an ingot slicing wire saw according to the present disclosure;
FIG. 17 is perspective view of a sixth embodiment of an ingot slicing wire saw according to the present disclosure;
FIG. 18 is a schematic partially cross sectional view of a seventh embodiment;
FIG. 19 is an enlarged view of a portion of FIG. 18;
FIG. 20 is a schematic view showing an upper cleaning member of a cleaning module of the seventh embodiment;
FIG. 21 is a schematic view showing a first lower cleaning member of the cleaning module of the seventh embodiment;
FIG. 22 is a schematic view showing a second lower cleaning member of the cleaning module of the seventh embodiment;
FIG. 23 is a flow chart of a method for slicing ingot;
FIGS. 24 to 27 respectively illustrating consecutive steps of the method; and
FIG. 28 is a view similar to FIG. 27 but illustrating that a feeding unit and an ingot are moved upwardly.

Before the disclosure is described in greater detail, it should be noted that where considered appropriate, reference numerals or terminal portions of reference numerals have been repeated among the figures to indicate corresponding or analogous elements, which may optionally have similar characteristics.

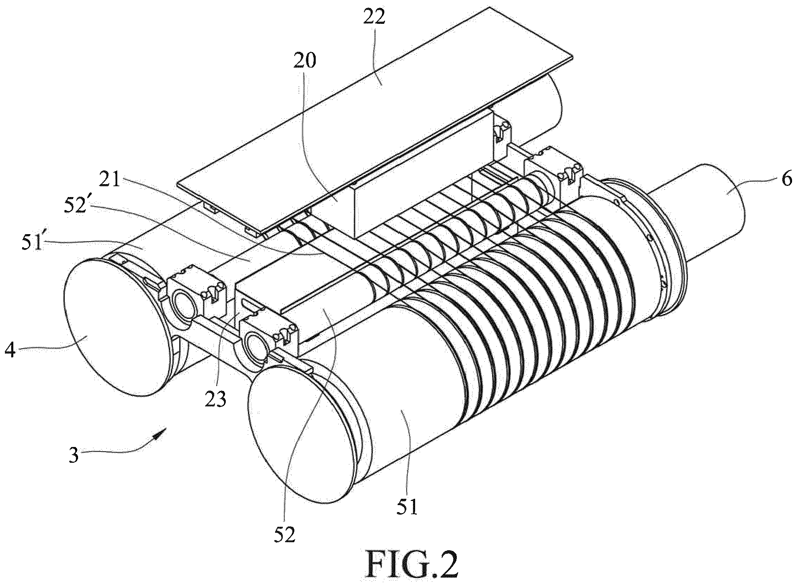

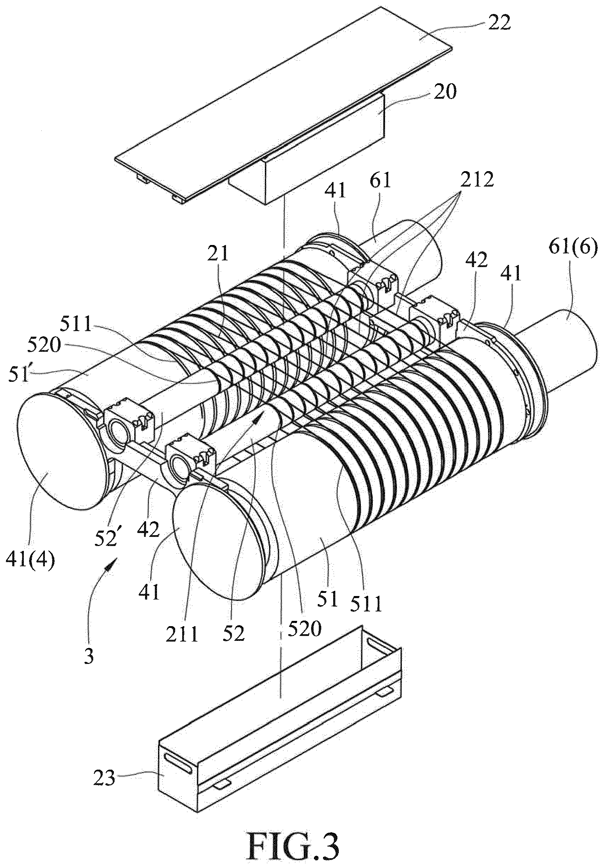

Referring to FIGS. 2 and 3, a first embodiment of an ingot slicing wire saw according to the present disclosure includes a feeding unit 22, a roller module 3 and a broken wafer receiving box 23.

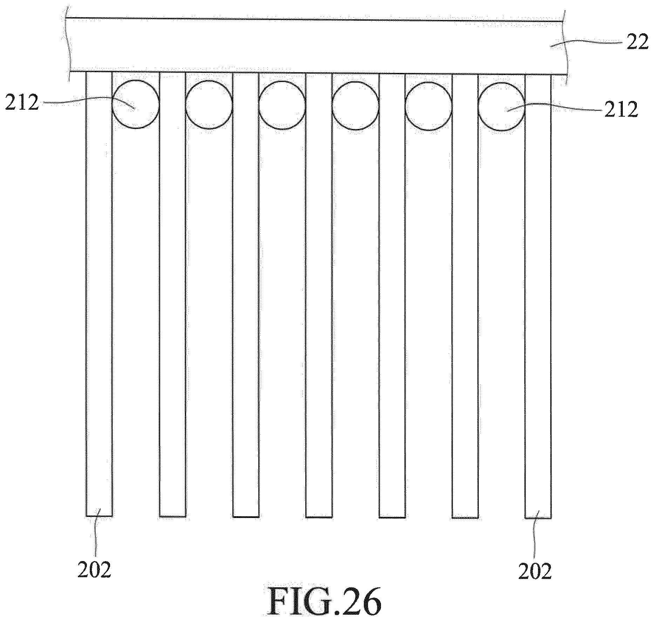

The feeding unit 22 is adapted for an ingot 20 to be mounted thereon. The roller module 3 is adapted for a sawing wire 21 to be wound thereon to form a wire net 211 for slicing the ingot 20 into a plurality of wafers 202 (see FIG. 26). The broken wafer receiving box 23 is used for receiving broken wafers (not shown) that are accidentally detached from the feeding unit 22.

The roller module 3 includes a supporting unit 4, two main rollers 51, 51' , two auxiliary rollers 52, 52' and a driving unit 6. In this embodiment, the feeding unit 22 is disposed between the main rollers 51, 51'.

The supporting unit 4 is for the main rollers 51, 51' and the auxiliary rollers 52, 52' to be supported thereon, in such a manner that the main rollers 51, 51' and the auxiliary rollers 52, 52' are spaced apart from each other. The supporting unit 4 includes four supporting members 41 and two brackets 42. Each of the brackets 42 is connected between two corresponding ones of the supporting members 41. One of the main rollers 51, 51' is rotatably connected to two of the supporting members 41, and the other one of the main rollers 51, 51' is rotatably connected to the other two of the supporting members 41. Opposite ends of each of the auxiliary rollers 52, 52' are respectively and rotatably connected to the brackets 42. In this embodiment, the broken wafer receiving box 23 is disposed between the auxiliary rollers 52, 52'.

Referring to FIGS. 3 to 5, in this embodiment, the main rollers 51, 51' are horizontally spaced apart from each other. Each of the main rollers 51, 51' has a rotating axis 512 and a diameter (A1). An imaginary horizontal plane (S1) is defined to pass through the rotating axes 512 of the main rollers 51, 51'. Two imaginary vertical planes (S2, S3) are defined to be perpendicular to the imaginary horizontal plane (S1) and respectively pass through the rotating axes 512 of the main rollers 51, 51'. The auxiliary rollers 52, 52' are disposed above the imaginary horizontal plane (S1) and between the imaginary vertical planes (S2, S3). An uppermost side 5211 of each of the auxiliary rollers 52, 52' is not lower than an uppermost side 515 of each of the main rollers 51, 51'. A lowermost side 5212 of each of the auxiliary rollers 52, 52' is not higher than the uppermost side 515 of each of the main rollers 51, 51'. In certain embodiments, a rotating axis 529 of each of the auxiliary rollers 52, 52' is not higher than the uppermost side 515 of each of the main rollers 51, 51'. In certain embodiments, the rotating axis 529 of each of the auxiliary rollers 52, 52' is lower than the uppermost side 515 of each of the main rollers 51, 51'. Each of the auxiliary rollers 52, 52' has a diameter (A2) that is smaller than one half of the diameter (A1) of each of the main rollers 51, 51'.

In this embodiment, the diameter (A1) of each of the main rollers 51, 51' ranges from 250 mm to 400 mm. Based on the diameter (A1) of each of the main rollers 51, 51' , the diameter (A2) of each of the auxiliary rollers 52, 52' ranges from 30 mm to 160 mm. In certain embodiments, the diameter (A2) of each of the auxiliary rollers 52, 52' ranges from 50 mm to 120 mm, and the diameter (A2) of each of the auxiliary rollers 52, 52' ranges from 60 mm to 90 mm.

The auxiliary rollers 52, 52' are spaced apart from each other at an appropriate distance allowing the ingot 20 to pass therebetween. A distance between the rotating axes 529 of the auxiliary rollers 52, 52' is smaller than a distance between the rotating axes 512 of the main rollers 51, 51'. The distance between the rotating axes 512 of the main rollers 51, 51' may be larger than 490 mm, such as in a range of 540 mm to 660 mm. Such distance is suitable for an available wire saw apparatus. The distance between the rotating axes 529 of the auxiliary rollers 52, 52' is exemplified to be ranged from 155 mm to 320 mm, which is smaller than the distance between the rotating axes 512 of the main rollers 51, 51' and can reduce the length of a section of the sawing wire 21 spanning between two rollers. Considering the durability and the performance of the ingot slicing wire saw, the distance between the rotating axes 529 of the auxiliary rollers 52, 52' may be ranged from 200 mm to 290 mm, and in certain embodiments, may be ranged from 230 mm to 260 mm. The diameter (A2) of each of the auxiliary rollers 52, 52' may range from 60 mm to 90 mm. Each of the auxiliary rollers 52, 52' may have a length ranging from 800 mm to 1600 mm. In this embodiment, the auxiliary rollers 52, 52' are horizontally spaced apart from each other. However, in certain embodiments, one of the auxiliary rollers 52, 52' may be higher than the other one of the auxiliary rollers 52, 52', based on actual requirements.

In this embodiment, there is no motive power being input to the auxiliary rollers 52, 52' , and the auxiliary rollers 52, 52' are driven by the sawing wire 21 that is driven by the main rollers 51, 51' . The stress applied to the sawing wire 21 is proportional to the moment of inertia of the auxiliary rollers 52, 52'. The greater the moment of inertia of the auxiliary rollers 52, 52', the easier the sawing wire 21 is to be worn. Such wire wearing is aggravated with thinner wires, such as wires having a diameter ranging from 40 mm to 80 mm, and may result in wire breaking during slicing. If the diameter (A2) of each of the auxiliary rollers 52, 52' is reduced for lowering moment of inertia, the auxiliary rollers 52, 52' may be easily deformed and even damaged by external forces. As a result, the diameter (A2) of each of the auxiliary rollers 52, 52' may be designed to be one fifth to one third of the diameter (A1) of each of the main rollers 51, 51'. For example, the diameter (A2) of each of the auxiliary rollers 52, 52' may range from 60 mm to 90 mm, and the rotating axes 529 of the auxiliary rollers 52, 52' may be designed to be lower than the uppermost side 515 of each of the main rollers 51, 51' for collaborating with the following designs, which reduce the moment of inertia of each of the auxiliary rollers 52, 52', and will be described in details below.

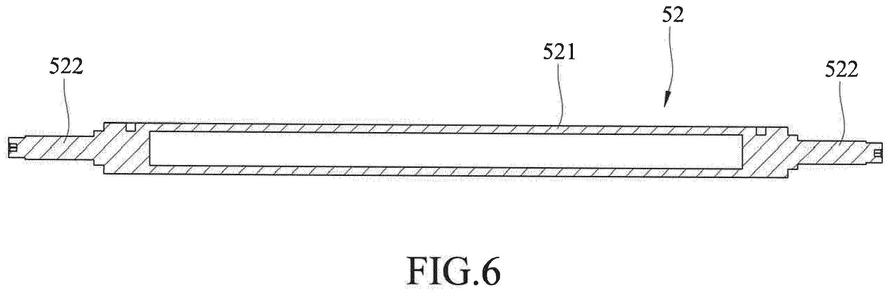

Referring to FIG. 6, each of the auxiliary rollers 52, 52' has a hollow main body portion 521, and two end portions 522 that are respectively connected to opposite ends of the main body portion 521. With such hollow main body portion design, the moment of inertia of each of the auxiliary rollers 52, 52' can be reduced.

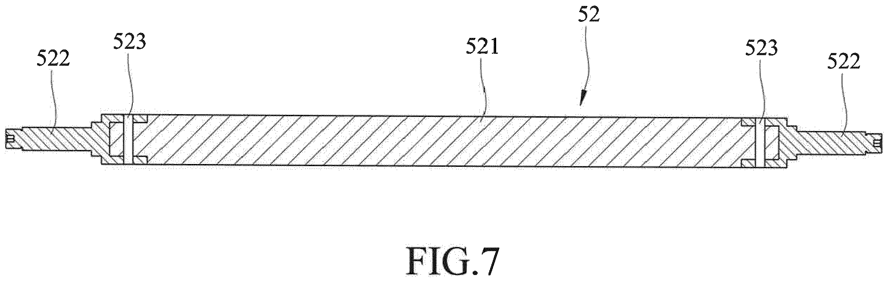

FIG. 7 is a variation of the auxiliary rollers 52, 52' . In this variation, the main body portion 521 of each of the auxiliary rollers 52, 52' is solid, and may be made of a material that is light weight, such as aluminum alloy. The end portions 522 of each of the auxiliary rollers 52, 52' may be made of a material that is heavier, such as steel. With such composite configuration, each of the auxiliary rollers 52, 52' has a moment of inertia that is about 17% lower than that of an auxiliary roller made entirely of steel. The assembly of one auxiliary roller 52 is described below. The end portions 522 are first heated and respectively connected to the opposite ends of the main body portion 521, followed by cooling the end portions 522. Two fixing members 523 are then used to fix the end portions 522 to the main body portion 521. In other variations, the end portions 522 may be connected to the main body portion 521 through spline coupling.

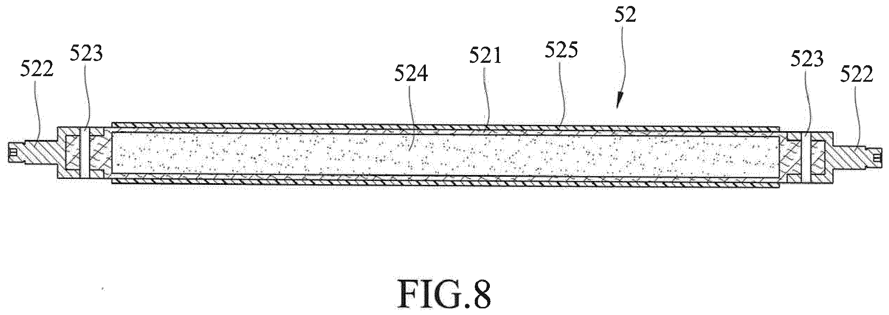

FIG. 8 is another variation of the auxiliary rollers 52, 52'. In this variation, the main body portion 521 of each of the main rollers 51, 51' is hollow, and the corresponding one of the main rollers 51, 51' further has a foaming member 524 filled in the main body portion 521 and a covering member 525 covering an outer surface of the main body portion 521. The foaming member 524 may be made of ethylene vinyl acetate (EVA). The covering member 525 may be made of polyurethane (PU). The main body portion 521 may be made of a carbon fiber composite material. With such configuration, each of the auxiliary rollers 52, 52' has a moment of inertia that is about 50% lower than that of the auxiliary roller made entirely of steel.

Reducing moment of inertia of each of the auxiliary rollers 52, 52' may improve the lifetime of the covering member 525, and reduce the deterioration of the abrasive particles, such as diamond particles on the sawing wire 21, especially for fine sawing wires 21, thereby reducing the consumption of the sawing wires 21 during slicing. In addition, each of the main rollers 51, 51' may be composed of composite materials, just as the auxiliary rollers 52, 52', for reducing the moment of inertia thereof.

The driving unit 6 includes two main driving members 61 that are respectively connected to the main rollers 51, 51' and that are operable to drive rotation of the main rollers 51, 51'.

In this embodiment, each of the main rollers 51, 51' has an outer surface formed with a plurality of spaced apart first wire receiving grooves 511. Each of the auxiliary rollers 52, 52' has an outer surface formed with a plurality of spaced apart second wire receiving grooves 520 that are respectively correspond in position to the first wire receiving grooves 511 of the main rollers 51, 51'. In certain embodiments, the sawing wire 21 has a diameter ranging from 40 µm to 80 µm, and is wound on the main rollers 51, 51' and the auxiliary rollers 52, 52' , and portions of the sawing wire 21 are respectively received in the first wire receiving grooves 511 of the main rollers 51, 51' and the second wire receiving grooves 520 of the auxiliary rollers 52, 52'. The wire net 211 of the sawing wire 21 has a sawing section 212 that spans over the main rollers 51, 51' and the auxiliary rollers 52, 52' , that is stretched taut, and that is adapted for slicing the ingot 20. The main rollers 51, 51' are operable to drive the sawing section 212 of the wire net 211 to reciprocate on the main rollers 51, 51' and the auxiliary rollers 52, 52' such that the auxiliary rollers 52, 52' are co-rotatable with the main rollers 51, 51', thereby allowing the sawing section 212 to slice the ingot 20.

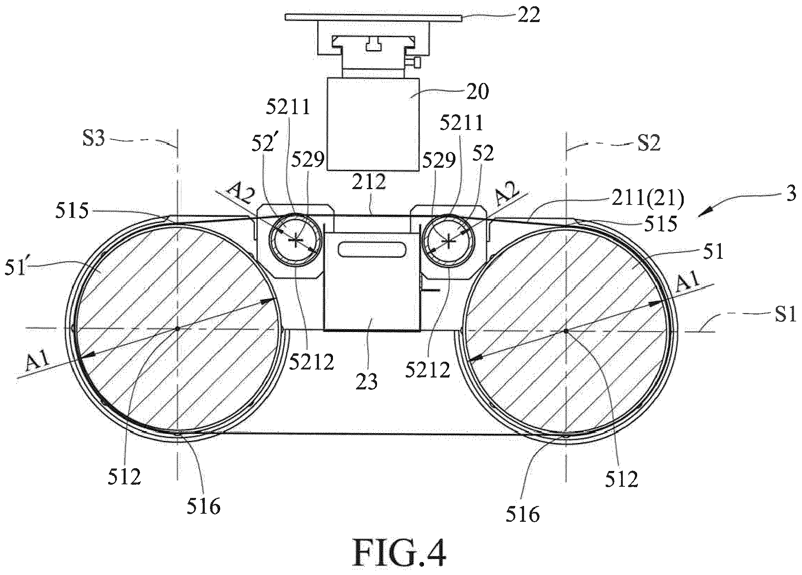

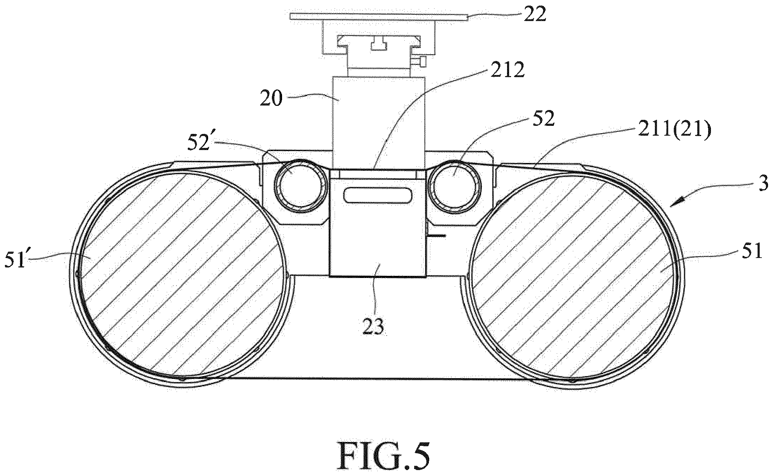

Referring to FIGS. 4 and 5, the ingot 20 is moved downwardly with the feeding unit 22 to abut against the sawing section 212 of the wire net 211, followed by driving the sawing section 212 of the wire net 211 to reciprocate on the main rollers 51, 51' and the auxiliary rollers 52, 52' to slice the ingot 20 into the wafers 202 as a result of further downward movement of the feeding unit 22 and the ingot 20. In this embodiment, the auxiliary rollers 52, 52' are horizontally spaced apart from each other such that the sawing section 212 of the wire net 211 can evenly apply a cutting force to the ingot 20. In certain embodiments, one of the auxiliary rollers 52, 52' may be located higher than the other one of the auxiliary rollers 52, 52' to provide a larger cutting force to the ingot 20.

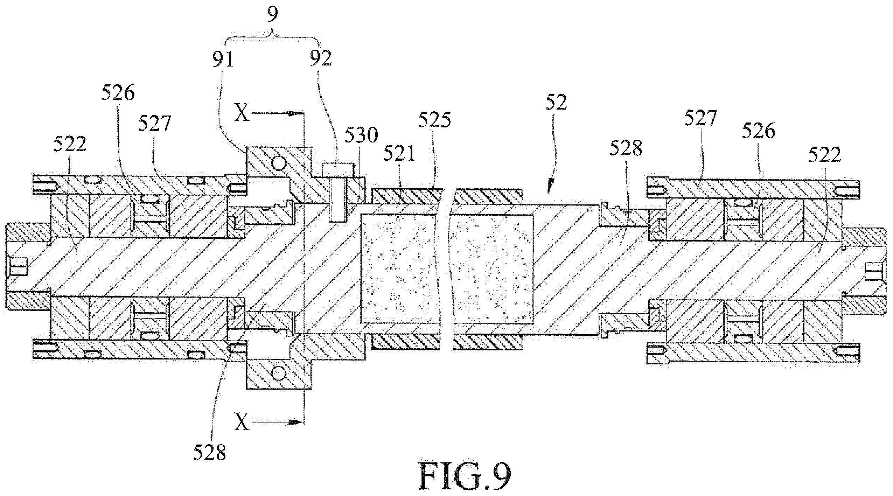

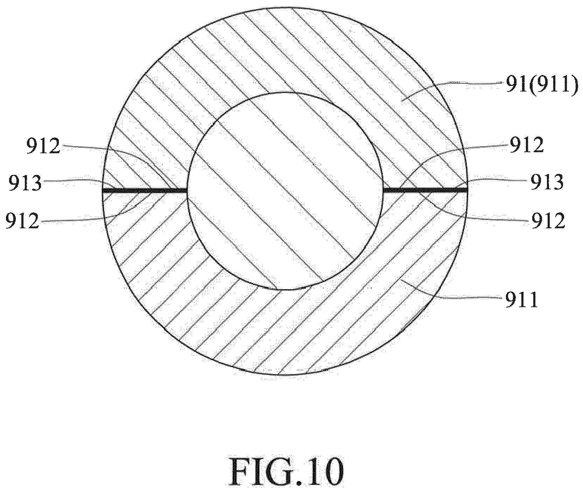

Referring to FIGS. 3, 5 and 9, after long-term use, the wire net 211 may damage the outer surface of each of the auxiliary rollers 52, 52'. Therefore, in certain embodiments, the covering member 525 is provided to each of the auxiliary rollers 52, 52' for protection. The covering member 525 can be processed by a machining apparatus (not shown) to form the second wire receiving grooves 520. As shown in FIG. 9, since each of the end portions 522 of each of the auxiliary rollers 52, 52' will be mounted with a bearing 526 and a sleeve 527 that is sleeved on the bearing 526, during the process of machining, the sleeves 527 are unable to drive the main body portion 521 to rotate due to the two degrees of freedom of the bearings 526. Therefore, for each of the auxiliary rollers 52, 52', it is provided with the end portions 522, two shoulder portions 528 respectively connected to the end portions 522, the main body portion 521 connected between the end portions 522, and a mounting hole 530 formed in the outer surface of the main body portion 521. An outer diameter of the main body portion 521 of each of the auxiliary rollers 52, 52' is larger than those of the shoulder portions 528 such that at least one of the sleeves 527 can be fixedly and detachably connected to the main body portion 521 through a holding unit 9. In one of the auxiliary rollers 52, 52' , the holding unit 9 includes an annular holding member 91 that is detachably sleeved on the auxiliary roller 52 and is threaded to the one of the sleeves 527, and a positioning pin 92 that extends through the annular holding member 91 and the mounting hole 530 so as to detachably fix the annular holding member 91 to the auxiliary roller 52. Therefore, when the one of the sleeves 527 is rotated, the main body portion 521 is co-rotatably driven such that the machining process can be carried out. Through the use of the holding unit 9, it is not needed to dissemble the bearings 526 to carry out the machining process. Referring to FIGS. 9 and 10, the holding unit 9 is detachably mounted to one of the shoulder portions 528 and is adjacent to the mounting hole 530. The annular holding member 91 of the holding unit 9 may include two interconnected semi-clips 911 that are made of rubber or metal. Each of the semi-clips 911 has two connecting surfaces 912 and two water proof members 913 that are respectively connected to the connecting surfaces 912.

The advantages and effects of this disclosure is summarized below.

Firstly, the presence of the auxiliary rollers 52, 52' reduces the distance that the sawing wire 21 spans between two rollers, thereby reducing the deformation of the sawing wire 21 when the sawing section 212 abuts against the ingot 20 and therefore reducing wobbling of the sawing section 212 during slicing, so as to improve the quality of the wafers 202.

Secondly, arrangement of the main rollers 51, 51' and the auxiliary rollers 52, 52' increases a distance between the sawing section 212 and portions of the sawing wire 21 located under the sawing section 212, thereby preventing the wafers 202 from interfering with the portions of the sawing wire 21 located under the sawing section 212 during slicing and providing a space for receiving the broken wafer receiving box 23.

Thirdly, if only two small diameter auxiliary rollers 52, 52' are used for moving the sawing wire 21, the sawing section 212 will reciprocate slowly, and the small diameter auxiliary rollers 52, 52' will provide less support to the sawing wire 21. This embodiment utilizes the main rollers 51, 51' to move the sawing wire 21 to provide steadier wire movement, thereby improving quality of the wafers 202.

Fourthly, the main rollers 51, 51' and the auxiliary rollers 52, 52' cooperatively support the sawing section 212 to evenly distribute the stress on the sawing section 212 and decrease the cutting force that the sawing section 212 exerts on the main rollers 51, 51' and the auxiliary rollers 52, 52'.

Fifthly, the main rollers 51, 51' and the auxiliary rollers 52, 52' cooperate to make it possible to use thinner sawingwire 21 for slicing the ingot 20, and reduce the possibility of wire breaking or wobbling of the thinner sawing wire 21.

Sixthly, if an ingot 20 of larger size is to be sliced by this embodiment, the auxiliary rollers 52, 52' may be removed to provide more space for accommodating the large sized ingot 20.

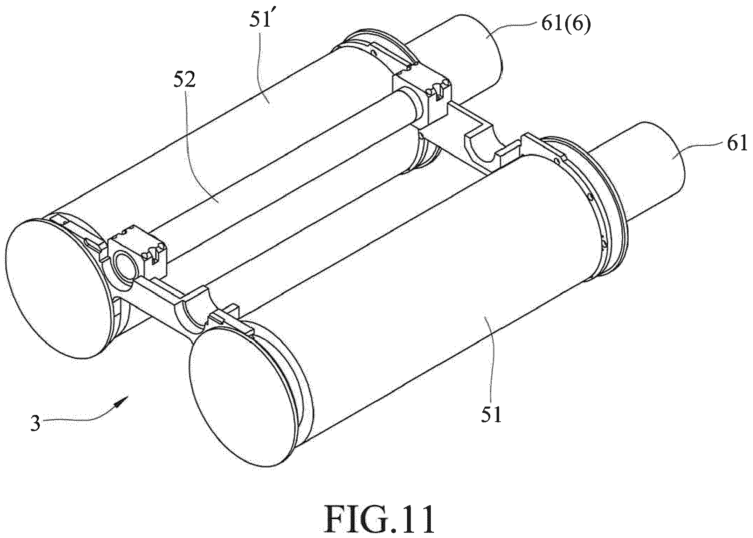

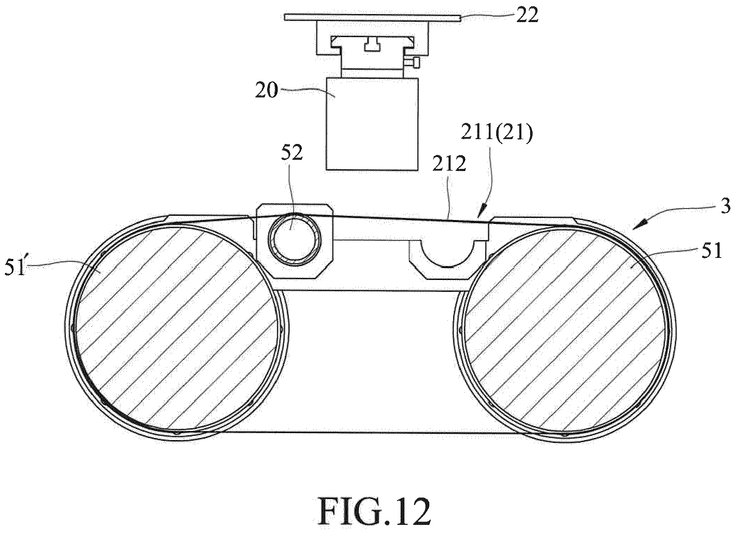

FIGS. 11 and 12, a second embodiment of this disclosure has a structure modified from that of the first embodiment. In the second embodiment, the roller module 3 only includes one auxiliary roller 52 such that a larger space is provided for accommodating an ingot 20 of larger size. The sawing wire 21 is wound on the main rollers 51, 51' and the auxiliary roller 52 in such a manner that the wire net 211 is tilted (see FIG. 12) for providing larger slicing force to the ingot 20.

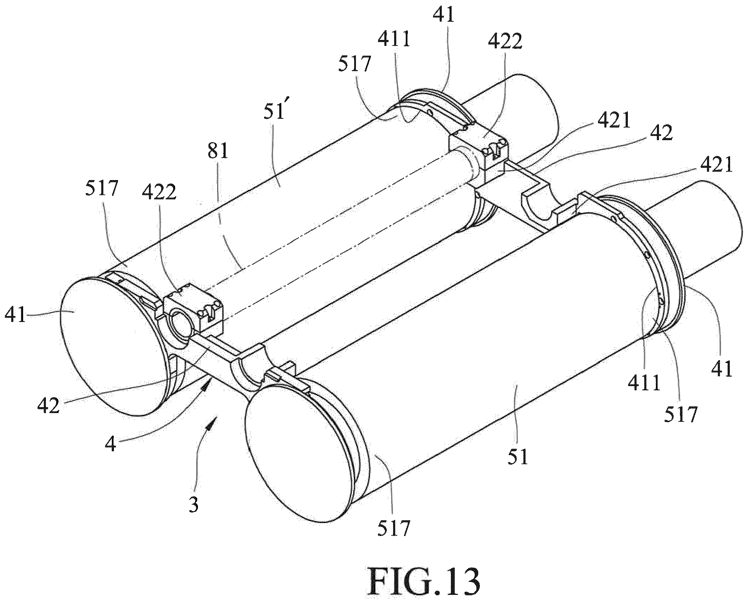

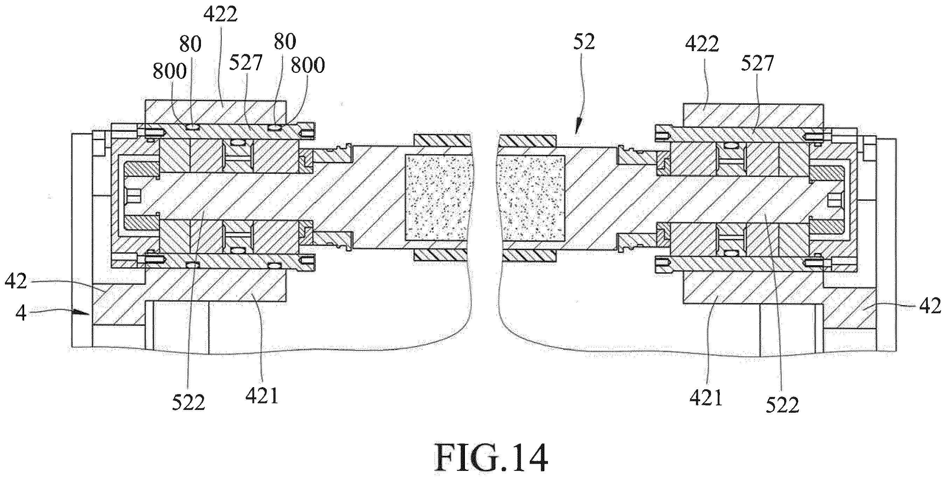

Referring to FIGS. 13 and 14, a third embodiment of this disclosure has a structure modified from that of the first embodiment. In the third embodiment, each of the main rollers 51, 51' has opposite connecting ends 517. Each of the supporting members 41 has a limiting hole 411 that is for a respective one of the connecting ends 517 of the main rollers 51, 51' to be rotatably and detachably connected thereto. Each of the brackets 42 includes a lower supporting part 421 and an upper supporting part 422 that is detachably connected to the lower supporting part 421 to confine a respective end of a corresponding one of the auxiliary rollers 52, 52' therebetween in such a manner that the auxiliary rollers 52, 52' are rotatable. One of the sleeves 527 has an annular groove 800 that receives two shock absorbers 80 therein. In this embodiment, each of the shock absorbers 80 is exemplified as an O-ring.

In assembly of the third embodiment, the connecting ends 517 of the main rollers 51, 51' are respectively engaged to the limiting holes 411 of the supporting members 41. Then, two adjusting jigs 81 (only one is shown in FIG. 13) are confined among the lower supporting parts 421 and the upper supporting parts 422 of the brackets 42 to adjust the main rollers 51, 51' to be horizontally aligned, followed by removing the adjusting jigs 81 and connecting the auxiliary rollers 52, 52' to the brackets 42.

The shock absorbers 80 are elastic, and can improve errors during assembling and can absorb shock. At one end portion 522 of the auxiliary roller 52 that is not provided with the shock absorbers 80 (see right side of FIG. 14), there is an infinitesimal gap among the sleeve 527 and the upper and lower supporting parts 422, 421. At the other end portion 522 of the auxiliary roller 52 that is provided with the shock absorbers 80 (see left side of FIG. 14), there is a larger gap (e.g., 0.06 mm to 0.08 mm) among the sleeve 527 and the upper and lower supporting parts 422, 421. The shock absorbers 80 may be provided to improve the assembling error caused by such larger gap, and may reduce vibration when the auxiliary roller 52 is rotating, which helps the slicing stability of the fine sawing wire 21 and improves the quality of the wafers 202. Due to inclusion of the shock absorbers 80 in the auxiliary rollers 52, 52' and the use of the adjusting jigs 81, installation of the auxiliary rollers 52, 52' can be facilitated and the quality of the wafers 202 can be improved.

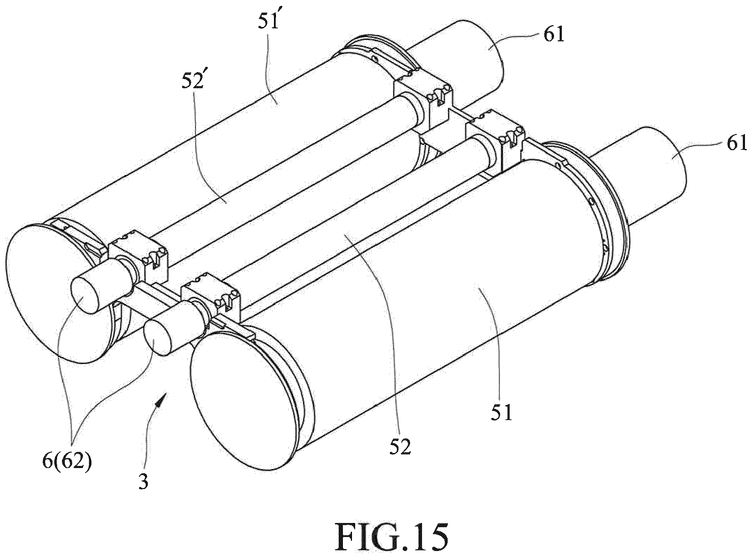

Referring to FIG. 15, a fourth embodiment of this disclosure has a structure modified from that of the first embodiment. In the fourth embodiment, the driving unit 6 further includes two secondary driving members 62 that are respectively connected to the auxiliary rollers 52, 52' to drive rotation of the auxiliary rollers 52, 52'. In this embodiment, the driving unit 6 provides larger power output to the main rollers 51, 51' and the auxiliary rollers 52, 52'. Since the secondary driving members 62 provide additional power output, the main driving members 61 may be driven using motors with lower power output for cost reduction.

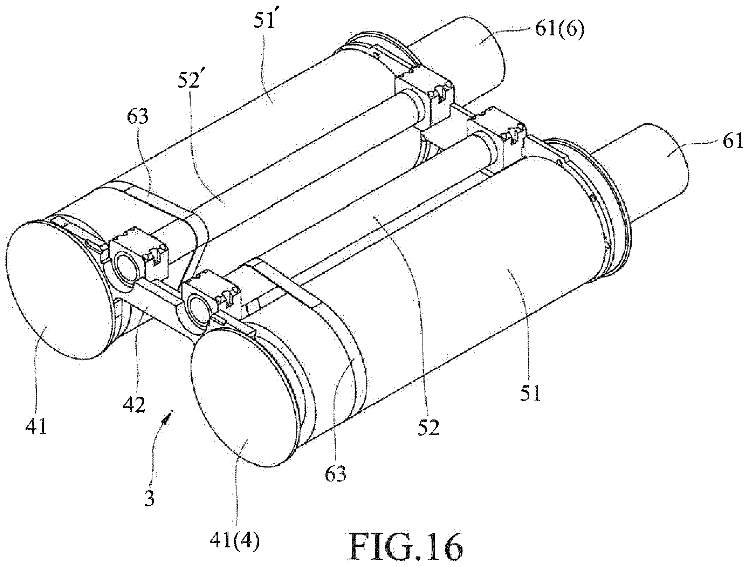

Referring to FIG. 16, a fifth embodiment of this disclosure has a structure modified from that of the first embodiment. In the fifth embodiment, the driving unit 6 further includes two transmitting belts 63 each transmitting rotation between one of the main rollers 51, 51' and one of the auxiliary rollers 52, 52'. The power of the main rollers 51, 51' will be steadily transmitted to the auxiliary rollers 52, 52' through the transmitting belts 63.

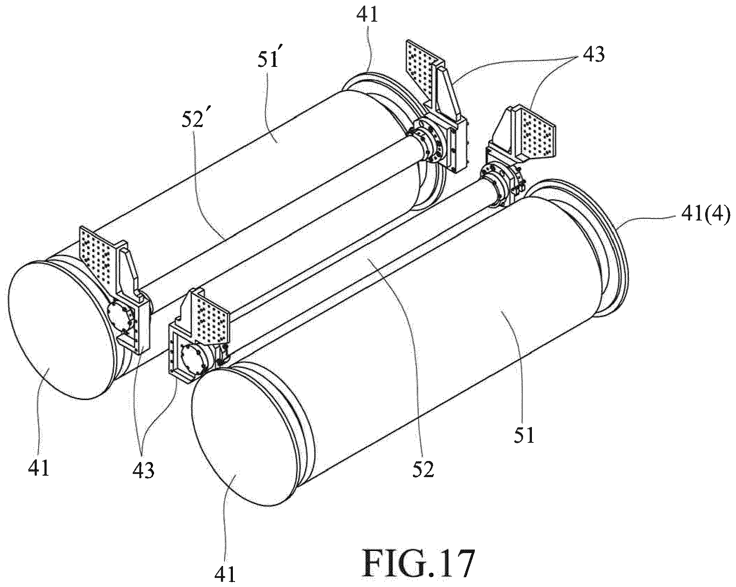

Referring to FIGS. 3 and 17, a sixth embodiment of this disclosure has a structure modified from that of the first embodiment. In the sixth embodiment, the brockets 42 are omitted and the supporting unit 4 further includes four retaining members 43 that respectively and rotatably support the end portions 522 of the auxiliary rollers 52, 52'.

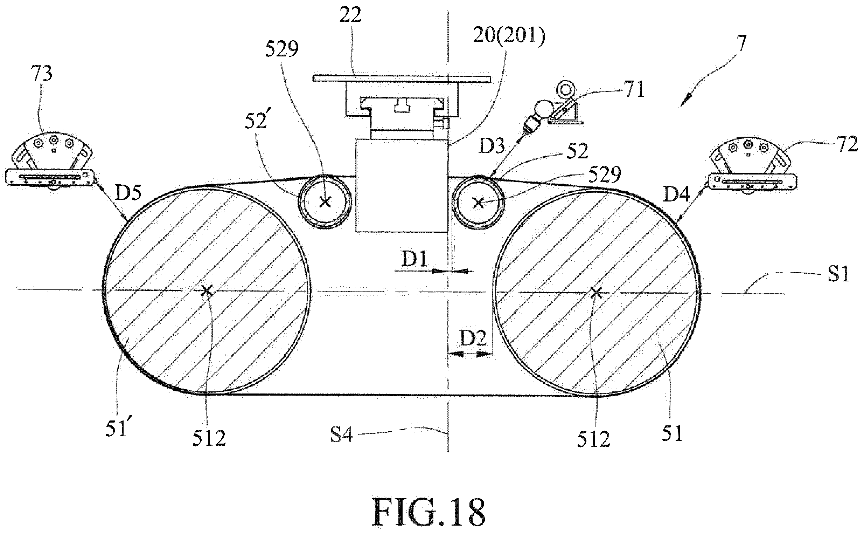

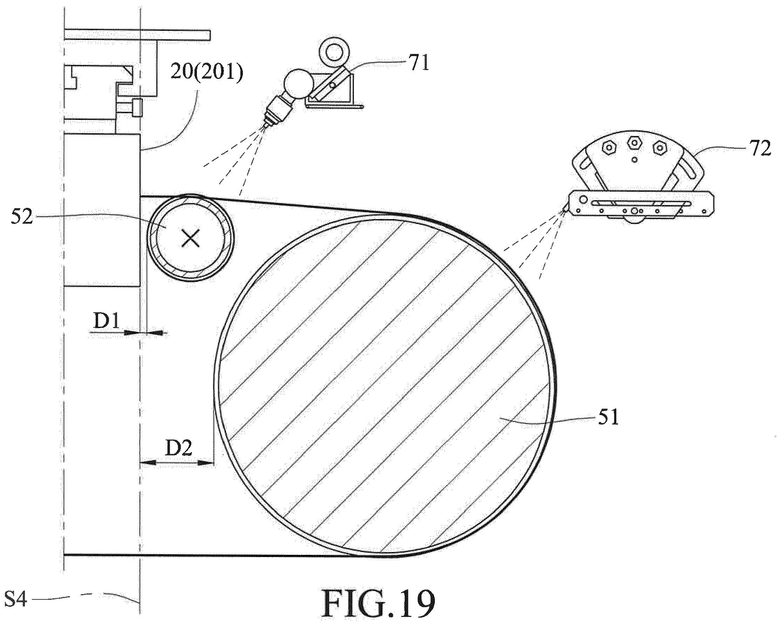

Referring to FIGS. 18 and 19, a seventh embodiment of this disclosure has a structure modified from that of the first embodiment. In the seventh embodiment, the main rollers 51, 51' are respectively a first main roller 51 and a second main roller 51' , and the auxiliary rollers 52, 52' are respectively a first auxiliary roller 52 and a second auxiliary roller 52'. The ingot 20 has a side surface 201 adjacent to the first auxiliary roller 52. The imaginary horizontal plane (S1) is defined to pass through the rotating axes 512 of the first and second main rollers 51, 51'. The side surface 201 of the ingot 20 is located in an imaginary reference plane (S4) perpendicular to the imaginary horizontal plane (S1). A shortest distance (D1) between the first auxiliary roller 52 and the imaginary reference plane (S4) ranges from 10 mm to 30 mm. A shortest distance (D2) between the first main roller 51 and the imaginary reference plane (S4) ranges from 60 mm to 130 mm.

In this embodiment, the ingot slicing wire saw further includes a cleaning module 7 including an upper cleaning member 71, a first lower cleaning member 72 and a second lower cleaning member 73. The upper cleaning member 71 is disposed above the first main roller 51. The first lower cleaning member 72 is disposed adjacent to the first main roller 51 and is lower than the upper cleaning member 71. The second lower cleaning member 73 is disposed adjacent to the second main roller 51' and is lower than the upper cleaning member 71.

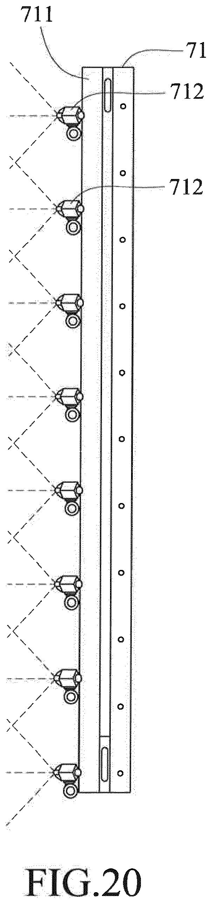

Refereeing to FIGS. 18 and 20, the upper cleaning member 71 includes a tube body 711 and a plurality of nozzles 712. The nozzles 712 extend from the tube body 711 toward the first auxiliary roller 52, are spaced apart from each other, and are operable to spray a liquid (not shown) onto the first auxiliary roller 52. In designing the spacing between adjacent two of the nozzles 712, it needs to be considered that the liquid sprayed by the nozzles 712 should cover the target surface and the spray ranges of the nozzles 712 should not be excessively overlapped. In this embodiment, a shortest distance (D3) between the upper cleaning member 71 and the first auxiliary roller 52 is 100 mm, and the spacing between any two adjacent nozzles 712 is 120 mm, in which the overlap ratio of the spray ranges of any two adjacent nozzles 712 is only 30%, thereby eliminating cleaning blind angle and avoiding unnecessary liquid interference.

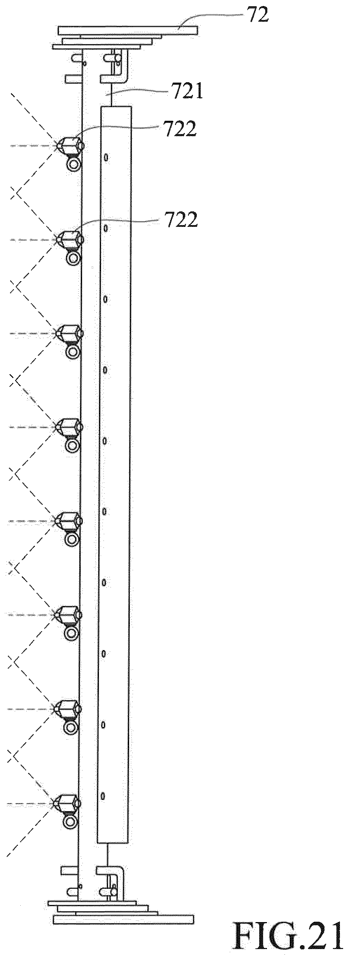

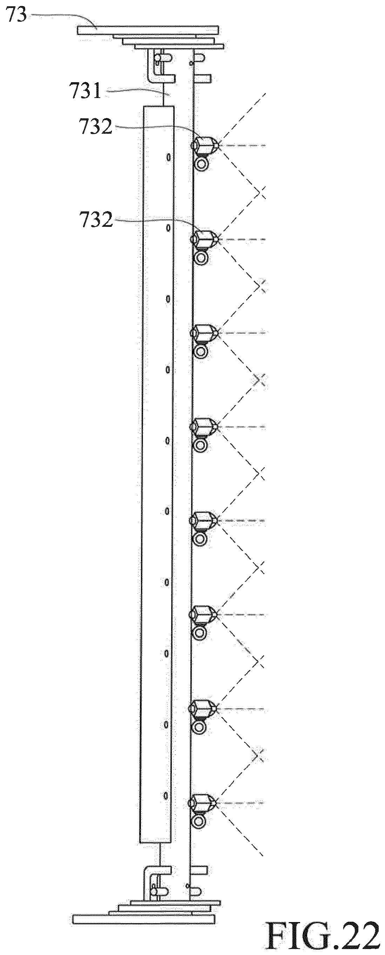

Referring to FIGS. 18, 21 and 22, the first lower cleaning member 72 includes a tube body 721 and a plurality of nozzles 722. The nozzles 722 extend from the tube body 721 toward the first main roller 51, are spaced apart from each other, and are operable to spray the liquid onto the first main roller 51. In this embodiment, a shortest distance (D4) between the first lower cleaning member 72 and the first main roller 51 is 40 mm, and the spacing between any two adjacent nozzles 722 is 120 mm. In this way, the blind angle and the liquid interference are minimized.

The second lower cleaning member 73 includes a tube body 731 and a plurality of nozzles 732. The nozzles 732 extend from the tube body 731 toward the second main roller 51', are spaced apart from each other, and are operable to spray the liquid onto the second main roller 51 ' . In this embodiment, a shortest distance (D5) between the second lower cleaning member 73 and the second main roller 51' is 40 mm, and the spacing between any two adjacent nozzles 732 is 120 mm. In this way, the blind angle and the liquid interference are minimized.

The cleaning module 7 can clean the wafers 202 after slicing in an efficient manner.

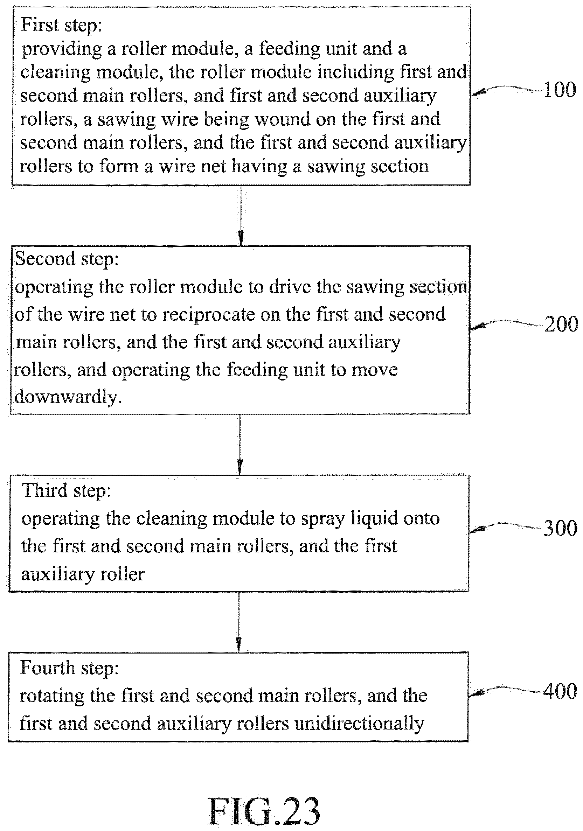

Referring to FIGS. 23 to 28, an embodiment of a method for slicing the ingot 20 according to the present disclosure includes steps as follows.

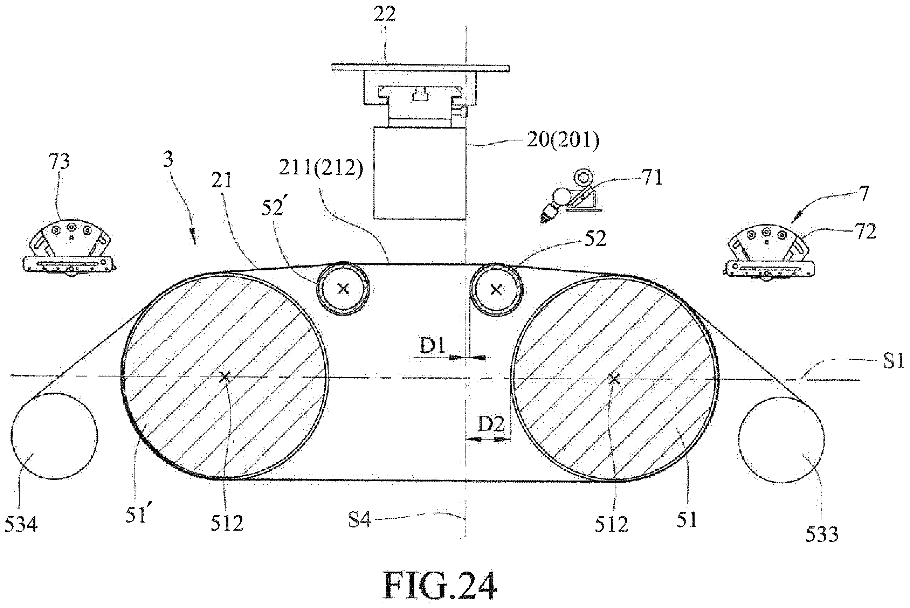

A first step 100, as shown in FIG. 24, is to provide the roller module 3 adapted for driving the sawing wire 21, the feeding unit 22 adapted for the ingot 22 to be mounted thereon, and the cleaning module 7 disposed adjacent to the roller module 3.

The roller module 3 includes the first main roller 51 and the second main roller 51' that are disposed at opposite sides of the feeding unit 22 and are horizontally spaced apart from each other. The roller module 3 further includes the first auxiliary roller 52 that is disposed between the first main roller 51 and the feeding unit 22, and the second auxiliary roller 52' that is disposed between the second main roller 51' and the feeding unit 22. The sawing wire 21 is wound on the first main roller 51, the secondmain roller 51', the first auxiliary roller 52 and the second auxiliary roller 52' to form the wire net 211 having the sawing section 212 that spans over the first main roller 51, the second main roller 51', the first auxiliary roller 52 and the second auxiliary roller 52'.

In this embodiment, the roller module 3 further includes a first wire roller 533 adjacent to the first main roller 51, and a second wire roller 534 adjacent to the second main roller 51'. The first main roller 51 and the second main roller 51' are located between the first wire roller 533 and the second wire roller 534. The sawing wire 21 has a first section 213 wound on the second wire roller 534, a second section 214 wound on the first wire roller 533, and a middle section 215 connected between the first and second sections 213, 214 and wound on the first main roller 51, the second main roller 51', the first auxiliary roller 52 and the second auxiliary roller 52' to form the wire net 211.

In certain embodiments, the second auxiliary roller 52' may be omitted based on actual requirements.

The cleaning module 7 includes the upper cleaning member 71 that is disposed above the first main roller 51, the first lower cleaning member 72 that is disposed adjacent to the first main roller 51 and that is lower than the upper cleaning member 71, and the second lower cleaning member 73 that is disposed adjacent to the second main roller 51' and that is lower than the upper cleaning member 71.

In this embodiment, the ingot 20 has a side surface 201 adjacent to the first auxiliary roller 52. The imaginary horizontal plane (S1) passing through the rotating axes 512 of the first and second main rollers 51, 51' is defined. The side surface 201 of the ingot 20 is located in the imaginary reference plane (S4) perpendicular to the imaginary horizontal plane (S1). The shortest distance (D1) between the first auxiliary roller 52 and the imaginary reference plane (S4) is defined. The shortest distance (D2) between the first main roller 51 and the imaginary reference plane (S4) is defined.

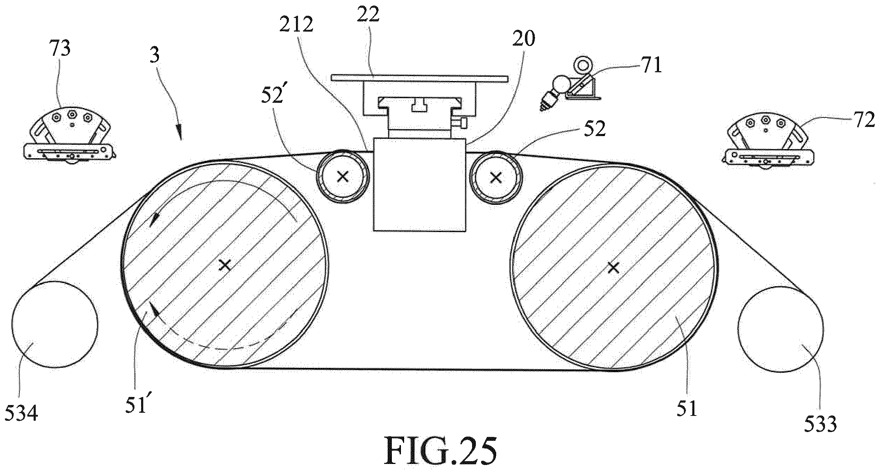

A second step 200, as shown in FIGS. 25 and 26, includes operating the roller module 3 to drive the sawing section 212 of the wire net 211 to reciprocate on the first main roller 51, the second main roller 51', the first auxiliary roller 52 and the second auxiliary roller 52 ' , in which the first and second main rollers 51, 51' are reciprocally rotated clockwise (as shown by the dashed arrow in FIG. 25) and counterclockwise (as shown by the solid arrow in FIG. 25). The second step 200 further includes operating the feeding unit 22 to move downwardly such that the sawing section 212 slices the ingot 20 into a plurality of the wafers 202 (see FIG. 26). In the second step 200, for each of the first and second main rollers 51, 51' , the clockwise rotation angle is slightly larger than the counterclockwise rotation angle, such that the second wire roller 534 is operated to unwind a portion of the first section 213 (i.e., the portion that is not yet worn due to slicing the ingot 20) of the sawing wire 21 therefrom to slice the ingot 20, and the first wire roller 533 is operated to wind a portion of the middle section 215 (i.e., the portion that is worn due to slicing the ingot 20) of the sawing wire 21 thereon.

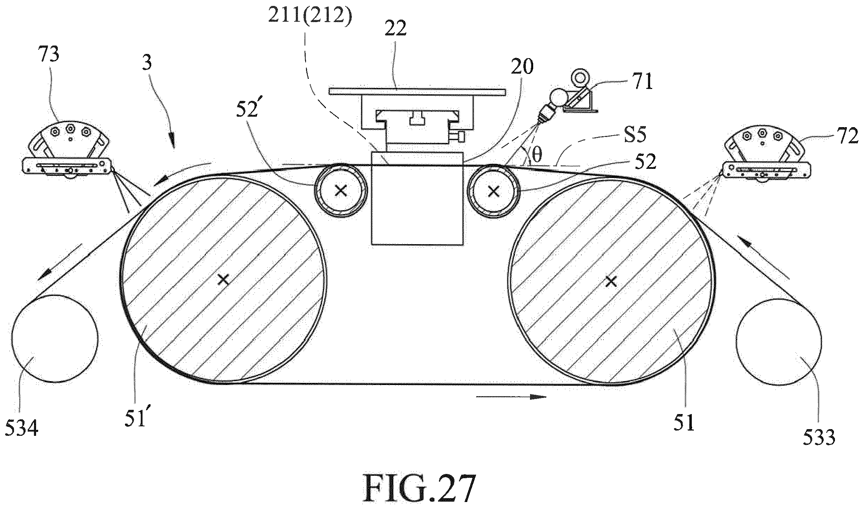

A third step 300, as shown in FIG. 27, includes operating the cleaning module 7 to spray the liquid, such that the upper cleaning member 71 is operated to spray the liquid onto the first auxiliary roller 52, the first lower cleaning member 72 is operated to spray the liquid onto the first main roller 51, and the second lower cleaning member 73 is operated to spray the liquid onto the second main roller 51'.

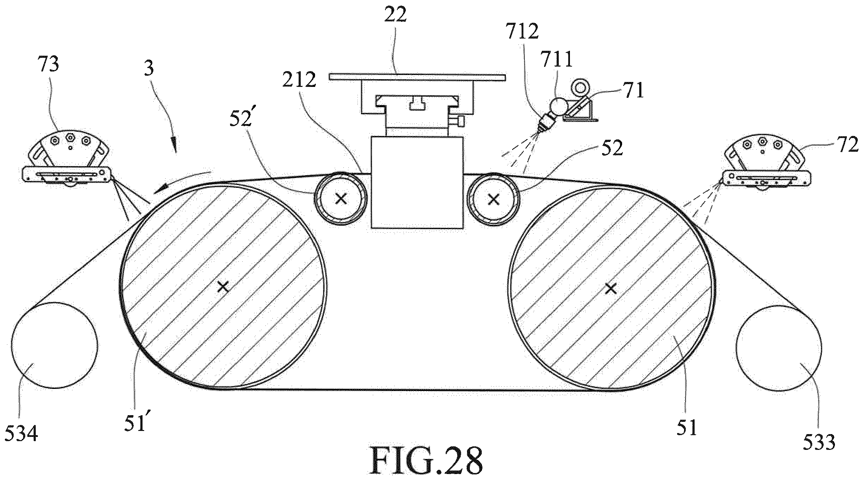

A fourth step 400, as shown in FIGS. 27 and 28, includes rotating the first main roller 51 and the second main roller 51', the first wire roller 533 and the second wire roller 534 unidirectionally (i.e., in this embodiment, counterclockwise), such that the sawing section 212 moves from the first main roller 51 toward the second main roller 51 ' , and the first wire roller 533 unwinds a portion of the sawing wire 21 therefrom and the second wire roller 534 winds another portion of the sawing wire 21 thereon. The fourth step 400 further includes moving the feeding unit 22 upwardly, in a manner that the liquid is carried by the sawing wire 21 onto the wafers 202 and the sawing section 212 located among the wafers to wipe clean the wafers 202. It is noted that, even if the dirt on the wafers 202 is washed off and is attached to a portion of the wire net 211, such wire net portion will eventually pass through the liquid sprayed by the first lower cleaning member 72 and be cleaned.

It should be noted that, in this embodiment, the third and fourth steps 300, 400 may be carried out simultaneously.

It is noted that, after slicing the ingot 20, a wire portion of the sawing section 212 of the wire net 211 has a diameter smaller than that of a wire portion of the wire net 211 not worn due to slicing the ingot 20. Such smaller diameter will minimize the possibility of scratching the wafers 202 in the fourth step 400.

Referring to FIGS. 20, 26 and 27, an imaginary horizontal net plane (S5) is defined to pass through the uppermost sides 5211 of the first and second auxiliary rollers 52, 52'. Each of the nozzles 712 opens in a direction (L) that forms an angle (θ) with the imaginary horizontal net plane (S5), such that the liquid sprayed from the nozzles 712 is carried on the sawing wire 21 to clean the wafers 202. In this embodiment, the angle (θ) ranges from 10 degrees to 80 degrees. If the angle (θ) is smaller than 10 degrees, the liquid may be sprayed directly to the side surface 201 of the ingot 20. If the angle (θ) is larger than 80 degrees, the liquid may not be effectively carried onto the wafers 202 by the sawing wire 21. In certain embodiments, the angle (θ) is 40 degrees. It is noted that, when the first auxiliary roller 52 is located adjacent to the wafers 202, sufficient liquid may be more effectively carried onto the wafers 202. Therefore, in this embodiment, the shortest distance (D1) between the first auxiliary roller 52 and the imaginary reference plane (S4) ranges from 10 mm to 30 mm, and the shortest distance (D2) between the first main roller 51 and the imaginary reference plane (S4) ranges from 60 mm to 130 mm. Furthermore, since the diameter (A2) of the first auxiliary roller 52 is smaller than one half of the diameter (A1) of the first main roller 51, the liquid can be effectively carried onto the wafers 202.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment, " "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

While the disclosure has been described in connection with what are considered the exemplary embodiments, it is understood that this disclosure is not limited to the disclosed embodiments but is intended to cover various arrangements included within the spirit and scope of the broadest interpretation so as to encompass all such modifications and equivalent arrangements.

## Claims

1. A roller module (3) adapted for driving a sawing wire (21) to slice an ingot (20) into a plurality of wafers (202), said roller module (3) **characterized by**:
two main rollers (51, 51') that are horizontally spaced apart from each other, each of said main rollers (51, 51') having a rotating axis (512) and a diameter (A1), an imaginary horizontal plane (S1) being defined to pass through said rotating axes (512) of said main rollers (51, 51'), two imaginary vertical planes (S2, S3) being defined to be perpendicular to the imaginary horizontal plane (S1) and respectively pass through said rotating axes (512) of said main rollers (51, 51'); and
at least one auxiliary roller (52) that is disposed above the imaginary horizontal plane (S1) and between the imaginary vertical planes (S2, S3), an uppermost side (5211) of said auxiliary roller (52) being not lower than an uppermost side (515) of each of said main rollers (51, 51'), said auxiliary roller (52) having a diameter (A2) smaller than one half of said diameter (A1) of each of said main rollers (51, 51'),
**characterized in that** said main rollers (51, 51') and said auxiliary roller (52) are adapted for the sawing wire (21) to be wound thereon to form a wire net (211) having a sawing section (212) that spans over said main rollers (51, 51') and said auxiliary roller (52) and that is adapted for slicing the ingot (20), said main rollers (51, 51') being operable to drive the sawing section (212) of the wire net (211) to reciprocate on said main rollers (51, 51') and said auxiliary roller (52) such that the sawing section (212) slices the ingot (20).

2. The roller module (3) as claimed in claim 1, **characterized in that** a lowermost side (5212) of said auxiliary roller (52) is not higher than said uppermost side (515) of each of said main rollers (51, 51').

3. The roller module (3) as claimed in claim 2, **characterized in that** a rotating axis (529) of said auxiliary roller (52) is not higher than said uppermost side (515) of each of said main rollers (51, 51').

4. The roller module (3) as claimed in claim 3, **characterized in that** said rotating axis (529) of said auxiliary roller (52) is lower than said uppermost side (515) of each of said main rollers (51, 51').

5. The roller module (3) as claimed in claim 1, **characterized in that** said roller module (3) comprises two of said auxiliary rollers (52, 52'), and further comprises a driving unit (6) that includes at least one main driving member (61) that is connected to one of said main rollers (51, 51') and that is operable to drive the one of said main rollers (51, 51'), said diameter (A1) of each of said main rollers (51, 51') ranges from 250 mm to 400 mm, said diameter (A2) of each of said auxiliary rollers (52, 52') ranges from 30 mm to 160 mm, and a distance between said rotating axes (529) of said auxiliary rollers (52, 52') ranges from 155 mm to 320 mm.

6. The roller module (3) as claimed in claim 5, **characterized in that** said distance between said rotating axes (529) of said auxiliary rollers (52, 52') ranges from 200 mm to 290 mm.

7. The roller module (3) as claimed in claim 1, **characterized in that** said auxiliary roller (52) further has a hollow main body portion (521), and two end portions (522) that are respectively connected to opposite ends of said main body portion (521).

8. The roller module (3) as claimed in claim 7, **characterized in that** said diameter (A2) of said auxiliary roller (52) ranges from 60 mm to 90 mm.

9. The roller module (3) as claimed in claim 1, **characterized in that** said auxiliary roller (52) further has two end portions (522), two shoulder portions (528) respectively connected to said end portions (522), a main body portion (521) connected between said shoulder portions (528), and a mounting hole (530) formed in an outer surface of said main body portion (521).

10. The roller module (3) as claimed in claim 9 being adapted to be connected to a holding unit (9) that includes an annular holding member (91) and a positioning pin (92), **characterized in that** an outer diameter of said main body portion (521) is larger than that of each of said shoulder portions (528), said roller module (3) further **characterized by** two bearings (526) that are respectively sleeved on said end portions (522) of said auxiliary roller (52), and two sleeves (527) that are respectively sleeved on said bearings (526), at least one of said sleeves (527) being adapted to be fixedly and detachably connected to said main body portion (521) of said auxiliary roller (52) through the holding unit (9), such that the annular holding member (91) of the holding unit (9) is sleeved on said auxiliary roller (52) and is threaded to said one of said sleeves (527), and such that the positioning pin (92) of the holding unit (9) extends through the annular holding member (91) into said mounting hole (530) so as to detachably fix the annular holding member (91) to said auxiliary roller (52).

11. The roller module (3) as claimed in claim 1, **characterized in that** said auxiliary roller (52) further has a main body portion (521) and two end portions (522) that are respectively connected to opposite ends of said main body portion (521), said roller module (3) further **characterized by** two bearings (526) that are respectively sleeved on said end portions (522) of said auxiliary roller (52), two sleeves (527) that are respectively sleeved on said bearings (526), a shock absorber (80) that is disposed on an outer surface of one of said sleeves (527), and a supporting unit (4) on which said main rollers (51, 51') and said auxiliary roller (52) are supported, said supporting unit (4) including four supporting members (41) and two brackets (42), each of which is connected between two corresponding ones of said supporting members (41), each of said main rollers (51, 51') having opposite connecting ends (517), each of said supporting members (41) having a limiting hole (411) that is for a respective one of said connecting ends (517) of said main rollers (51, 51') to be rotatably and detachably connected thereto, each of said brackets (42) including a lower supporting part (421) and an upper supporting part (422) that is detachably connected to said lower supporting part (421) to confine a respective end of said auxiliary roller (52) therebetween in such a manner that said auxiliary roller (52) is rotatable.

12. An ingot slicing wire saw **characterized by** a feeding unit (22) adapted for an ingot (20) to be mounted thereon, and a roller module (3) adapted for a sawing wire (21) to be wound thereon, the sawing wire (21) having a diameter ranging from 40 µm to 80 µm, and a sawing section (212) adapted for slicing the ingot (20), said roller module (3) including:
two main rollers (51, 51') that are horizontally spaced apart from each other, each of said main rollers (51, 51') having a rotating axis (512) and a diameter (A1); and
two auxiliary rollers (52, 52') that are horizontally disposed between said main rollers (51, 51'), a lowermost side (5212) of each of said auxiliary rollers (52, 52') being not higher than an uppermost side (515) of each of said main rollers (51, 51'), each of said auxiliary rollers (52, 52') having a rotating axis (529), a diameter (A2) smaller than one half of said diameter (A1) of each of said main rollers (51, 51'), a hollow main body portion (521), and two end portions (522) respectively connected to opposite ends of said main body portion (521) of a corresponding one of said auxiliary rollers (52, 52'), a distance between said rotating axes (529) of said auxiliary rollers (52, 52') being smaller than a distance between said rotating axes (512) of said main rollers (51, 51'),
**characterized in that** said feeding unit (22) is operable to move the ingot (20) downwardly while said main rollers (51, 51') and said auxiliary rollers (52, 52') drive the sawing section (212) of the sawing wire (21) to reciprocate on said main rollers (51, 51') and said auxiliary rollers (52, 52') such that the sawing section (212) slices the ingot (20) into a plurality of wafers (202).

13. The ingot slicing wire saw as claimed in claim 12, **characterized in that** said rotating axis (529) of each of said auxiliary rollers (52, 52') is lower than said uppermost side (515) of each of said main rollers (51, 51').

14. The ingot slicing wire saw as claimed in claim 12, **characterized in that** said main rollers (51, 51') are respectively a first main roller (51) and a second main roller (51'), said auxiliary rollers (52, 52') being respectively a first auxiliary roller (52) and a second auxiliary roller (52'), said first auxiliary roller (52) being disposed between said first main roller (51) and said feeding unit (22), said ingot slicing wire saw further **characterized by** a cleaning module (7) including an upper cleaning member (71) that is disposed above said first main roller (51), said upper cleaning member (71) including a tube body (711), and a plurality of nozzles (712) that extend from said tube body (711) toward said first auxiliary roller (52), that are spaced apart from each other and that are operable to spray a liquid onto said first auxiliary roller (52).

15. The ingot slicing wire saw as claimed in claim 14, **characterized in that** an imaginary horizontal net plane (S5) is defined to pass through uppermost sides (5211) of said auxiliary rollers (52, 52'), each of said nozzles (712) opening in a direction (L) that forms an angle (θ) ranging from 10 degrees to 80 degrees with the imaginary horizontal net plane (S5), such that the liquid sprayed from said nozzles (712) is carried on the sawing wire (21) to clean the wafers (202).

16. The ingot slicing wire saw as claimed in claim 13, the ingot (20) having a side surface (201) adjacent to said first auxiliary roller (52), **characterized in that** an imaginary horizontal plane (S1) is defined to pass through said rotating axes (512) of said first and second main rollers (51, 51'), the side surface (201) of the ingot (20) being located in an imaginary reference plane (S4) perpendicular to the imaginary horizontal plane (S1), a shortest distance (D1) between said first auxiliary roller (52) and the imaginary reference plane (S4) ranging from 10 mm to 30 mm, a shortest distance (D2) between said first main roller (51) and the imaginary reference plane (S4) ranging from 60 mm to 130 mm.

17. The ingot slicing wire saw as claimed in claim 14, **characterized in that** said cleaning module (7) further includes a first lower cleaning member (72) that is disposed adjacent to said first main roller (51) and that is lower than said upper cleaning member (71), and a second lower cleaning member (73) that is disposed adjacent to said second main roller (51') and that is lower than said upper cleaning member (71), said first lower cleaning member (72) including a tube body (721), and a plurality of nozzles (722) that extend from said tube body (721) of said first lower cleaning member (72) toward said first main roller (51), that are spaced apart from each other and that are operable to spray the liquid onto said first main roller (51), said second lower cleaning member (73) including a tube body (731), and a plurality of nozzles (732) that extend from said tube body (731) of said second lower cleaningmember (73) toward said secondmain roller (51'), that are spaced apart from each other and that are operable to spray the liquid onto said second main roller (51').

18. A method for slicing an ingot (20) **characterized by**:
providing a roller module (3) adapted for driving a sawing wire (21), a feeding unit (22) adapted for the ingot (20) to be mounted thereon, and a cleaning module (7) disposed adjacent to the roller module (3), the roller module (3) including a first main roller (51) and a second main roller (51') that are respectively disposed at opposite sides of the feeding unit (22) and are horizontally spaced apart from each other, and a first auxiliary roller (52) that is disposed between the first main roller (51) and the feeding unit (22), the sawing wire (21) being wound on the first main roller (51), the second main roller (51') and the first auxiliary roller (52) to form a wire net (211) having a sawing section (212) that spans over the first main roller (51), the second main roller (51') and the first auxiliary roller (52), the cleaning module (7) including an upper cleaning member (71) that is disposed above the first main roller (51), and a first lower cleaning member (72) that is disposed adjacent to the first main roller (51) and that is lower than the upper cleaning member (71);
operating the roller module (3) to drive the sawing section (212) of the wire net (211) to reciprocate on the first main roller (51), the second main roller (51') and the first auxiliary roller (52), and subsequently operating the feeding unit (22) to move downwardly such that the sawing section (212) slices the ingot (20) into a plurality of wafers (202);
operating the cleaning module (7) to spray a liquid, such that the upper cleaning member (71) is operated to spray the liquid onto the first auxiliary roller (52), and the first lower cleaning member (72) is operated to spray the liquid onto the first main roller (51); and
rotating the first main roller (51) and the second main roller (51') unidirectionally such that the sawing section (212) moves from the first main roller (51) toward the second main roller (51'), and moving the feeding unit (22) upwardly, in a manner that the liquid is carried by the sawing wire (21) onto the wafers (202) and the sawing section (212) located among the wafers (202) to clean the wafers (202).

19. The method as claimed in claim 18, **characterized in that**:
in the providing step, the roller module (3) further includes a first wire roller (533) adjacent to the first main roller (51) and a second wire roller (534) adjacent to the second main roller (51'), the first main roller (51) and the second main roller (51') being located between the first wire roller (533) and the second wire roller (534);
in the providing step, the sawing wire (21) has a first section (213) wound on the second wire roller (534), a second section (214) wound on the first wire roller (533), and a middle section (215) connected between the first and second sections (213, 214) and wound on the first main roller (51), the second main roller (51') and the first auxiliary roller (52) to form the wire net (211) ;
in the step of operating the roller module (3), the second wire roller (534) is operated to unwind a portion of the first section (213) of the sawing wire (21) therefrom to slice the ingot (20), and said first wire roller (533) is operated to wind a portion of the middle section (215) of the sawing wire (21) thereon; and
in the step of rotating the first main roller (51) and the second main roller (51'), the first wire roller (533) and the second wire roller (534) are operated to rotate unidirectionally in a manner that the first wire roller (533) unwinds a portion of the sawing wire (21) therefrom, and the second wire roller (534) winds another portion of the sawing wire (21) thereon.

20. The method as claimed in claim 18, **characterized in that**:
in the providing step, the cleaning module (7) further includes a second lower cleaning member (73) that is disposed adjacent to the second main roller (51') and that is lower than the upper cleaning member (71);
in the step of operating the cleaning module (7), the second lower cleaning member (73) is operated to spray the liquid onto the second main roller (51'); and
in the providing step, the roller module (3) further includes a second auxiliary roller (52') that is disposed between the second main roller (51') and the feeding unit (22), and the sawing wire (21) is wound on the first main roller (51), the second main roller (51'), the first auxiliary roller (52) and the second auxiliary roller (52') to form the wire net (211).
